# EUROPEAN PATENT APPLICATION

(11) **EP 2 166 347 A1**
(43) Date of publication of application: **24.03.2010**
(21) Application number: 08016426.2
(22) Date of filing: 18.09.2008
(51) Int. Cl.: G01N 27/22, A01G 25/16

(54) **A substrate water content measuring device**

(71) Applicant: Rockwool International A/S, 2640 Hedehusene (DK)
(72) Inventor: de Groot, Jacob Frank, 6042 KK Roermond (NL)
(74) Representative: Grootscholten, Johannes A.M.

(57) **Abstract**

The present invention relates to a plant growth substrate water content measuring device to determine a value of water content in a substrate for growing plant material, for instance a substrate slab made from mineral wool, such as glass wool or stone wool, coco, peat or any other organic or non-organic material, wherein the device at least comprises:
- a first electrode and a second electrode;
- control means at least in use connected to the first electrode and the second electrode, the control means comprising at least detecting means for registering a capacitance between the first electrode and the second electrode and calculating means to deduce from the registered capacitance a value of the water content in the substrate. And it relates to a process of determining a water or moisture content of a horticultural substrate slab for plant material using a water content measuring device.

## Description

### Technical field of the invention

Water management, the control and steering of among others the water content in agriculture or horticulture, for instance based on mineral wool products, such as stone wool slabs and blocks, etc., is important for the grower to optimize the growing process, to increase yield and/or product quality. The focus on water management that starts already at the beginning of the growing process is a precondition to steer, control and influence the root zone in substrate products and root development.

For this purpose growers need a tool to measure water content and preferably also an indication of the electrical conductivity (in short: EC) in the root zone of the slab. Such a tool, if reliable and accurate, could be made available, therewith an essential instrument and contributory part of a total solution for growers can be provided, in which substrate, service and advice are all included. Making such a water content meter available is essential for optimising the water management.

Overall, the grower should be able with such an instrument, to optimize his growing process further by combining the water retaining characteristics of the substrate with root zone management.

The present invention is directed at providing a plant growth substrate water content measuring device, and is related to the technical field of electronic sensors within the horticultural field, with the overall purpose of determining the water content of a plant growth substrate. It is, however, explicitly noted here that such a sensor could be fully applicable for other substrates for growing plants which is not made of stone wool or even other than inorganic material, such as coco, peat etc.

### Background of the invention

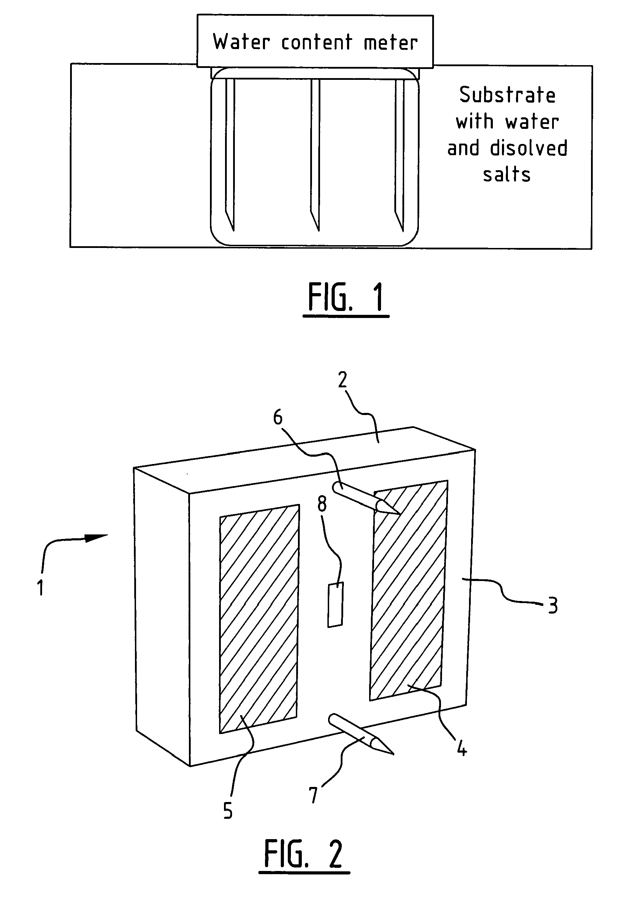

For many years water content meters have been known and used in practice and in production. Such known water content meters comprise stainless steel sensor pins connected to electronics and are used for determining capacity, temperature and resistance in the measured objects, for which the sensor pins are to be inserted into the substrate. The measured values are then used for calculating the water content and electrical conductivity (EC) of liquids, such as a nutrient solution and/or water, in the growth substrates. A schematic representation of such a known water content meter is shown in Figure 1.

One disadvantage of this known water content meter is that it needs an extensive calibration procedure per piece to make it work reliable. A further disadvantage is that the complete apparatus is very complicated in its construction which causes malfunctioning and a huge percentage of repairs. Also, there's a relationship between a higher value of the EC in the substrate and a decrease in reliability of the water content meter as a result of the physical configuration of the sensor.

Many of the disadvantages have an origin in the configuration, which requires inserting a number of electrode probes into the substrate. The electrode probes are often provided in pairs or threesomes and are forced away from each other or closer to one another upon being inserted into the substrate. The movement of the probe electrodes through the substrate and forces at that time being exerted on the electrode probes by the substrate material, in particular if this is a mineral wool, can cause spreading or pressing together of the probe electrodes. This is a consequence of a combination of the electrode probe properties with properties of the substrate, in particular if the substrate comprises mineral wool. As a consequence the results of measurements are often based on erroneous assumptions regarding the distance between the electrodes, and thus this may very likely result in incorrect measurement results.

Despite the fact that there are many water content meters on the market, nearly all of them have the same kind of shortcomings.

EP 0392639 discloses a device and a method for measuring the moisture or water content of a substrate or growing product for growing plants of which at least a part consists of artificial material, wherein a capacitance value of said substrate is measured between two or more insertable electrodes or probes.

### Disclosure of the invention

According to the invention, a plant growth substrate water content measuring device is provided to determine a value of water content in a substrate for growing plant material, for instance a substrate slab made from mineral wool, such as glass wool or stone wool, coco, peat or any other organic or non-organic material, wherein the device at least comprises: a first electrode and a second electrode; control means at least in use connected to the first electrode and the second electrode, the control means comprising at least detecting means for registering a capacitance between the first electrode and the second electrode and calculating means to deduce from the registered capacitance a value of the water content in the substrate, wherein at least one of the first electrode and the second electrode extends in or along a plane in correspondence with at least one outer boundary surface of the substrate.

As a consequence no probe needs to be inserted into the substrate material. In prior art technology, it was believed to be necessary to provide probe-like electrodes and repeatedly have a user insert these probe-like electrodes into the substrate for obtaining measurements. Often, inserting the electrode probes was performed in a limited selection of measurement points, which would cause disruption of the internal structure of the substrate and as a consequence affect the reliability of the measurements. Without such disruption the measurements can be more reliable, especially after longer periods of use of a substrate and repeated testing for the water content thereof.

In a preferred embodiment of the invention, the device comprises a single carrier having at least one carrier surface, on which at least one of the first electrode and the second electrode is arranged to define a single planar surface. When such a planar surface is arranged against any one surface of the substrate opposite another electrode with an area or volume to be subjected to a tested in between the electrodes, at least the positively formed planar surface with the at least one electrode will exhibit a well known positioning without undesired deviations.

It is noted here that another surface than the planar surface with the electrode thereon could be arranged against the substrate. The planar surface could be on the back - relative to the substrate to be tested - of a plate-like member having a predefined thickness or where a separator as described below could be interposed between the electrode defining the planar surface and the substrate.

In an embodiment exhibiting the planar surface defined by the electrode on a carrier surface, the first electrode and the second electrode are arranged on the carrier surface of the single carrier in an intertwined manner. Thus the total resulting assembly can be made compact.

Further, in another embodiment, the first electrode and the second electrode each form a loop, which result in space saving optimal area usage, in particular, though not exclusively if the electrodes are intertwined.

The device according to the invention can also be such, that the first electrode and the second electrode are arranged on the carrier surface of the single carrier in a concentric manner. As a consequence a compact and area saving assembly can be obtained.

In yet another embodiment of the invention, the device further comprising a connector for electrical connection of either or both of the first electrode and the second electrode with the control means, and a connection between the connector and either or both of the first electrode and the second electrode, the connection having multiple conductive branches on, in or through the carrier. An optimal distribution of the electrical potential over the length and the area of the first and/or second electrodes is obtained.

In yet another embodiment a device according to the invention comprises two carriers each having a carrier surface, where the first electrode is arranged on the carrier surface of a first of the two carriers and the second electrode is arranged on the carrier surface of a second of the carriers. If the carriers are entirely independent and separate, each of the electrodes can be optimally placed relative to a desired surface of the plant growth substrate by appropriate manoeuvring of the corresponding carrier. Positioning means can be employed to position the electrodes relative to one another accurately in such an embodiment. However, if the embodiment in question is such, that the carriers are interconnected, optimal positioning of the electrodes relative to one another is predetermined, without having to allow for different positions at different measurement times, and having to take such differences into account when calculating the results from the taken measurements.

In fact, it is considered to be preferable at present, although no alternatives are at all excluded, that the carriers are interconnected at an angle relative to one-another to define two planar surfaces at an angle relative to one another. Such an embodiment can very conveniently be arranged against a corner edge of a substrate with particularly well defined and very accurate relative positioning of the electrodes relative to one another. Moreover, the interior of the plant growth substrate is then most certainly subjected to measurement, without any option of the electrical fields crossing over from one electrode to another being able to follow the exterior surfaces of the plant growth substrate, which would yield a superficial result of the water or moisture content at best. In contrast a thorough measurement of with certainty the interior of the plant growth substrate will be obtained.

In another specific embodiment the first electrode and the second electrode are arranged on at least one carrier surface in a side-by side relationship. This may include the angled configuration for arranging against a corner edge of the plant growth substrate, or a straightforward planar surface with both electrodes in said single plane. Irrespective of the presence of the angle between the surfaces defined by the separate electrodes, the side-by-side relationship allows for even more accurate positioning of the electrodes relative to one another.

In another embodiment the device according to the invention further comprises fastening means for holding the first electrode and/or the second electrode in a predetermined position with respect to at least one outer surface of the substrate and/or relative to one another. Such fastening means could be embodied in a releasable configuration to in a locked state define a fixed interconnection between the otherwise separate electrodes. In such a case where fastening means are employed, such fastening means can comprise at least one of the means from the group of fastening means, the group comprising: a hook; an anchor; a probe, such as at least one pin forming part of an electric conductivity measuring device; a belt, such as an elastic band or a strap of adhesive tape and/or a similar contraption. As such the fastening means can take or have any convenient shape or form.

For convenient manoeuvring the device according to the invention can further comprise a handle for manual manoeuvring the device, in particular by a user, such as a plant grower.

In view of the fact that electrode plates needs to be close enough to the subject to measure and remain constant in this position during the measurement, it is also considered conceivable, in an embodiment of the invention, to provide in the device an extra weight to secure or arrest the device on or in the measuring place or position, with sufficient pressure to maintain a constant, reliable and repeatable reading or measurement of the capacitance.

In yet another embodiment the device according to the invention can further comprise a separator element having an effective thickness corresponding with a predefined distance between the outer surface of the substrate and either of the first electrode and the second electrode.

In a preferred embodiment, at least the electrodes are encapsulated in a waterproof casing. As a result it has been made possible to employ multi-purpose chips and general multipurpose electronic, rather than complex dedicated chips, in combination with the new and inventive sensors. The reason is that measurement relates solely to capacity, while eliminating conductivity. Compensating measures, such as complex circuitry, can as a result be omitted and simple general purpose circuitry thus can be employed.

It is noted that the present invention also relates to a process of determining a water or moisture content of a horticultural substrate slab for plant material using a water content measuring device according to claim 1, which process comprises the steps of: arranging the first electrode and the second electrode against the predetermined out surface of the substrate; and determine the fluid or moisture content, in particular the water content of the substrate for plant material form at least one measurement obtained with the electrodes.

The present invention will be described in more detail on the basis of a limited number of embodiments to which the present invention is however not restricted, referring to the accompanying drawings, in which the same and similar elements and components can be designated with identical reference numbers, even if strictly speaking different embodiments are shown, and wherein:
Figure 1 shows a prior art configuration of a device comprising (at least) two probe or pin shaped electrodes to be inserted in the plant growth substrate;
Figure 2 shows a basic schematic configuration of a device according to the invention;
Figure 3 shows the device of figure 2 in use;
Figure 4 shows in a single view several mutually similar embodiments of devices having different dimensions;
Figures 5A - 5E schematically show different of basic designs of embodiments of devices according to the invention, or at least the manner of use thereof;
Figure 6 shows a similar view as figure 4 but of alternative embodiments of devices of the invention;
Figure 7 shows a single carrier embodiment, where electrodes are intertwined;
Figures 8 and 9 each show schematically the operation of different fastening means to be employed for positioning a device according to the invention;
Figures 10 and 11 show respective devices in different embodiments according to the invention;
Figure 12 shows a connection schematic for an embodiment as represented in figure 11;
figure 13 shows a side cross sectional view along the line XIII - XIII in the figure 12 embodiment;
Figure 14 shows another embodiment of the invention; and
Figure 15 shows yet another embodiment of a device according to the invention.

Figure 1 shows a prior art device configuration with several probes, of which two form electrodes for capacitance measurement. The probes are arranged in close proximity and intended to be inserted into a plant growth substrate top determine at least the capacitance of intermediate material and moisture/water.

Figure 2 shows an embodiment of a device according to the invention. The device 1 has a single carrier plate 2 defining a single carrier surface 3 with two flat electrodes 4 and 5 arranged thereon, which are for instance foil-like and adhered to the carrier surface 3 for measuring the capacity there-between and to determine the water content of a plant growth substrate, after the device 1 is arranged against an exterior surface of the plant growth substrate (not shown in figure 2). Optionally, also two EC conductivity electrodes in the form of pins 6 and 7 can be arranged on the carrier plate 2 for determining the electrical conductivity (EC). Further optionally a temperature sensor 8 can be arranged on the single carrier surface 3 of the carrier plate 2. Especially and/or in particular it is beneficial that each of the pair of electrodes 4, 5, can remain outside the substrate during measuring and does not need to be inserted into the substrate. As a consequence the plant growth substrate material, for example mineral wool, is far less disturbed than when a prior art device with probe shaped electrodes is employed.

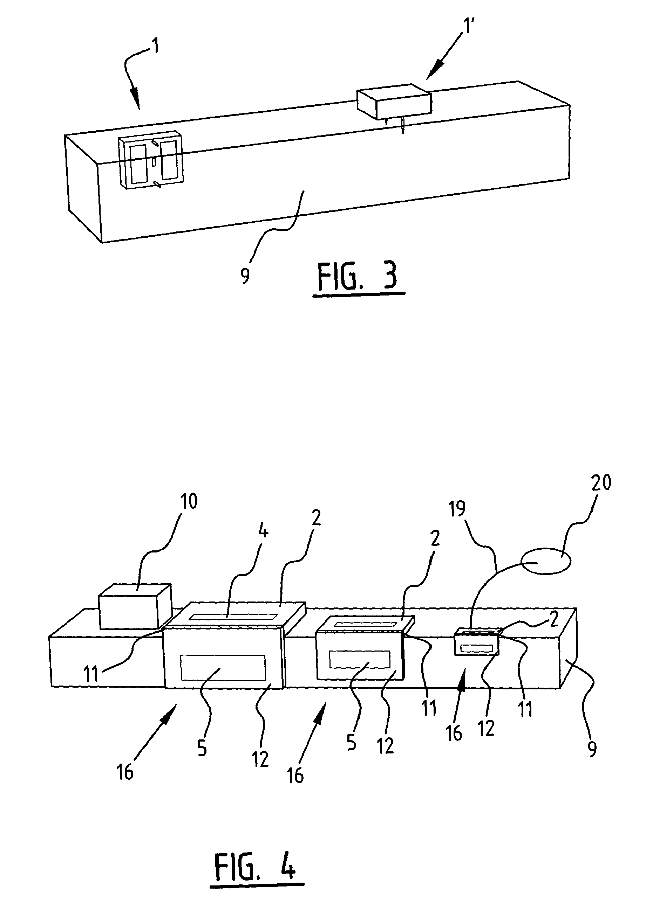

In the embodiment of figure 2 the device 1 having the carrier plate 2 is provided with two flat electrodes 4, 5, which are for instance foil-like, form together a capacity sensor on the carrier surface 3. The two electrodes 4, 5 are to be positioned flat onto or against the exterior of a plant growth substrate 9, as shown in figure 3, with on the left side the device 1 arranged behind the plant growth substrate 9. Preferably the device 1 is arranged at a representative location. In figure 3 on the right side thereof another positioning of the device is indicated at 1'. A representative location is or can be one where the most representative reading of moisture or water content can be achieved. This will be elaborated on below.

In this embodiment of figures 2 and 3 the two electrodes 4, 5 are small rectangular plane electrodes covered by a watertight or waterproof coating, which coating is not sensitive for abrasion. Without prejudice as to the scope of protection for the present invention it is noted here that the size of the device shown in figures 2 and 3 is approximately 5 cm wide, 4 cm high and 5 cm thick. The electronics are placed inside the device, for example inside the carrier 2, which can be hollow for this purpose, but the electronics can also be arranged at a location distant from the device 1. Communications with the device, if the electronics are within the carrier or distant there from, are preferably wireless.

As can be seen in figure 3, a slab or the plant growth substrate 9 is provided with devices according to the present invention, where the optional EC electrode pins 6, 7 are employed for fixing devices 1 to the measuring location on the plant growth substrate 9. As such these EC electrode pins form invasive fastening means. Other embodiments of fastening means for securing devices according to the invention to stay in place when positioned against or on the slab, can also be contemplated, such as a clamps or adhesive tape.

It should be noted, again merely as a non-limiting example, that the size of the rectangular capacity electrodes can be from 2-100 mm in width and 5-150 mm length. Furthermore, the EC pins can by way of example be from 5-15 mm in length and 0.5-3 mm in diameter.

As can also be seen from the figures, the device 1 can also be provided with a temperature sensor 8 positioned on or just under the surface of the complete sensor housing e.g. between the two electrodes 4, 5 for measuring capacity and between the EC electrode pins 6, 7.

In fact, it is noted here that shapes and orientations of the two capacity electrodes 4, 5 may vary greatly within the scope of all possibilities to practice the present invention. Some of these possibilities will be elaborated on below whilst it is abundantly clear no other embodiment is relinquished.

A highly preferred embodiment of the device according to the invention is shown in figure 4, in three separate sizes relative to a plant growth substrate 9. On the plant growth substrate 9 a growth block 10 is arranged. With the plant growth substrate 9 forming a basis for the block 10, plants can be allowed to grow to maturity, with plant roots (eventually) extending into the plant growth substrate 9. To achieve this, the right circumstances, like humidity in the block 10 and the plant growth substrate 9, need to be provided. To ascertain this, the device according to the invention plays a crucial role.

The three embodiments of device 16 shown in figure 4 all comprise a single carrier assembly 11 formed of two interconnected carriers 2, 12. Optionally the carriers 2, 12 are releasably interconnected. On each of the carriers 2, 12 one of the two capacity electrodes 4, 5 is arranged. Preferably the electrodes 4, 5 are arranged on the carriers in a watertight manner, for example by applying a watertight coating over the capacity electrodes 4, 5 on the carriers 2, 12. The two separate (interconnected) carriers 2, 12 could in another embodiment also be replaced by a single angled element.

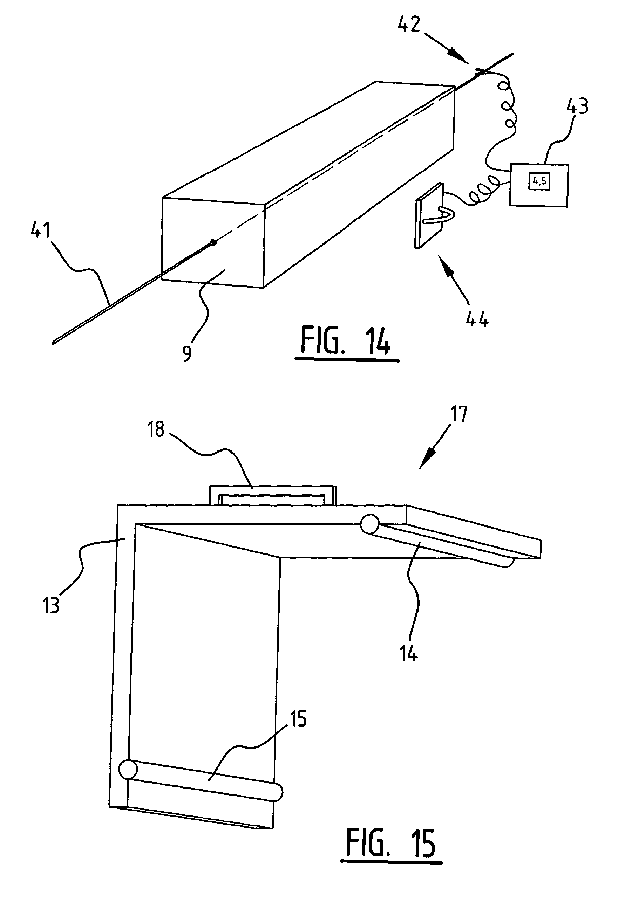

In figure 4, the capacity electrodes 4, 5 cover a surface area of the carrier 2, 12 to which the relevant capacity electrode belongs. Figure 15 shows an alternative embodiment having wire-shaped capacity electrodes 14, 15 on a unitary angled carrier assembly 13. In figure 4, in the right-hand side representation of an embodiment of a device according to the invention a schematic representation of a connection to an exterior controller 20 via a connector 19 is shown. Preferably such a connection can be wireless.

The embodiments of figures 4, 6 and 15 exhibit the common property of devices 16, 17 that the field through the plant growth substrate 9 over which measurements are performed necessarily extends across a corner section of the plant growth substrate 9.

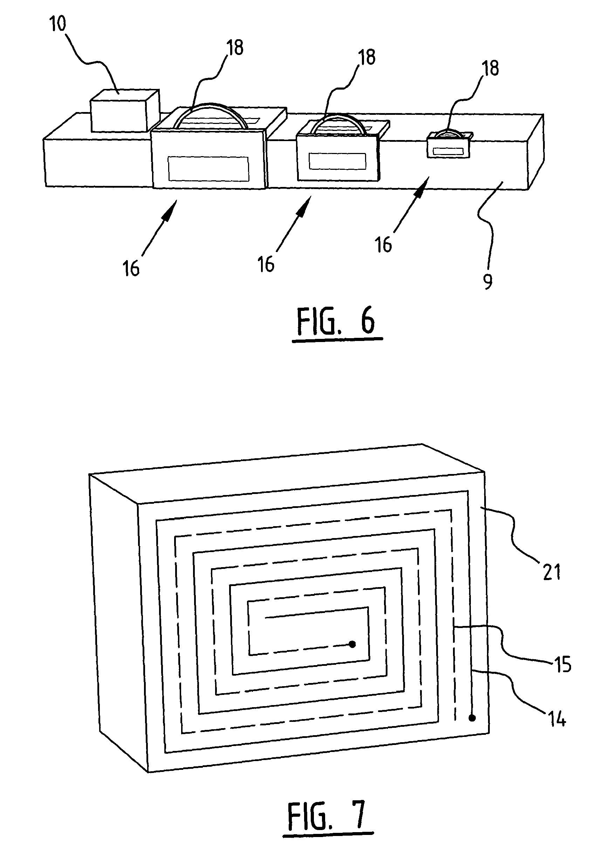

To facilitate arranging the device 16 in figure 6 or device 17 in figure 15 against or on a corner edge of the plant growth substrate 9, a handle 18 may optionally be provided, although other arresting or fastening means can additionally or alternatively also be provided, as set out herein below.

Similar to figure 4, in figure 6 a block or cube 10 is arranged on the plant growth substrate 9.

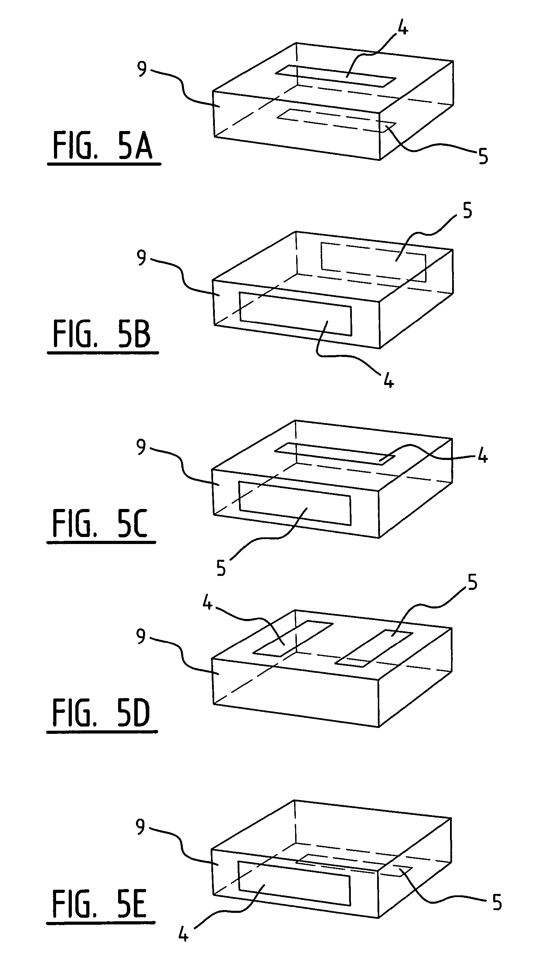

A representation is shown in figures 5A - 5E of some characteristics and features of arranging capacity electrodes 4, 5 against one surface of a slab 9 (figure 5D), on opposite sides of the slab 9 (figures 5A and 5B) or against adjoining surfaces of the slab 9 (on a corner edge of the slab 9; see figures 5C and 5E).

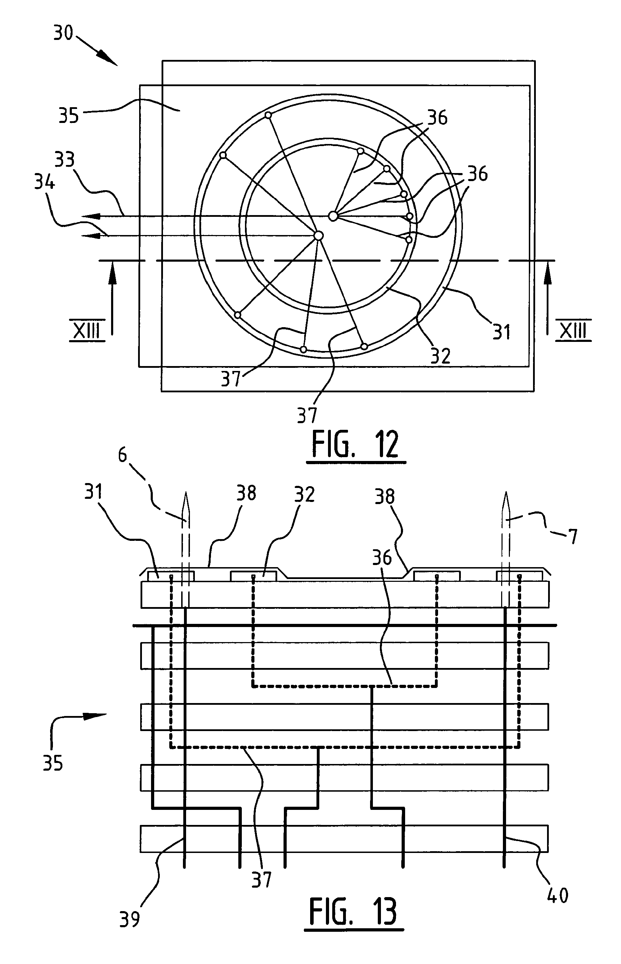

Besides the rectangular design of the capacity electrodes 4, 5 in figures 2-4, the wire-shaped capacity electrodes 14, 15 can be formed as round going electrode-wires also called a "bicycle wheel"-configuration on a single carrier 21. In such an embodiment, as shown in figure 7, the device can comprise two circular 3 mm thick electrodes of copper, and further optionally also at least a pair of electric conductivity electrodes and a temperature sensor (not shown in figure 7). The electrodes 14, 15 are in this embodiment considered to be intertwined. Another bicycle-wheel configuration will be elaborated on below, referring to figures 12, 13.

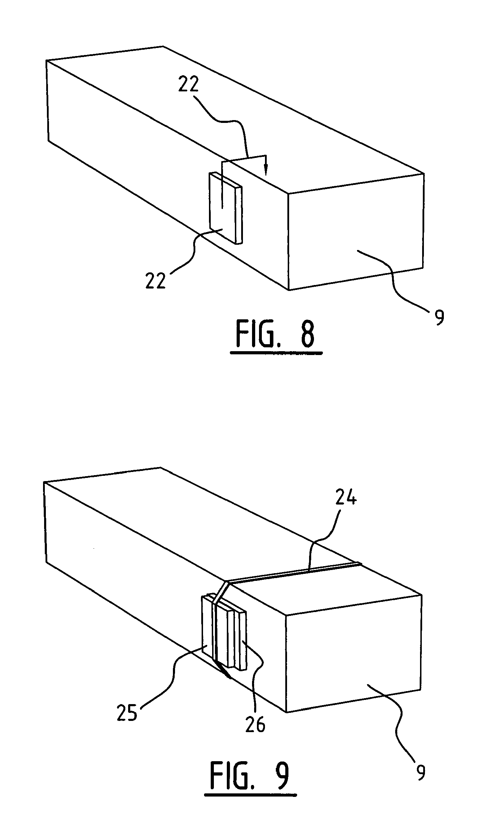

Figures 8 and 9 schematically show embodiments of devices according to the invention having fastening means to enhance the possibilities for arranging such a device. In figure 8 a hook 22 is provided to enable the device 23 to be attached to the plant growth substrate 9. More basically, the embodiment of figure 9 comprises a string or flexible and possibly even elastic band 24 to keep the device 25 against the side surface of the plant growth substrate 9. It is noted here that a separator element formed by a rectangular element 26 may be provided to enhance the possibilities of arranging the device at a desired location relative to the plant growth substrate 9 and, if a similar device is arranged at an adjoining or opposite surface of the substrate 9, relative to such a similar device (not shown) and the capacity electrode belonging thereto.

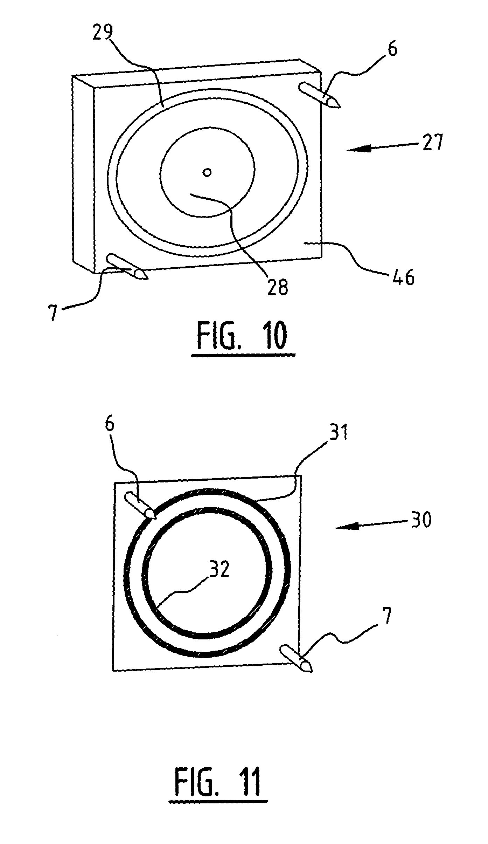

Figure 10 shown an embodiment of a device 27 according to the invention with a central disc shaped electrode 28, which is surrounded by a circular counter electrode 29. Outside the circular electrode EC pins 6, 7, which are in themselves optional and not considered essential for the basic concept of the invention, are arranged on the carrier 46, which forms a single carrier surface for both capacity electrodes 28, 29.

Figure 11 shows an embodiment of a device 30 according to the invention having two band-shaped capacity electrodes 31, 32, again also provided with the optional EC pins 6, 7.

In figures 10 and 11 the electrodes 28, 29 and 31, 32 are considered to be concentric.

Figure 12 shows the device 30 of figure 11 in some more detail with respect to the connectors for each of the electrodes 31, 32 therein. Connector wires 33, 34 are arranged to extend across a multilayer structure 35 to approximately the centre of the concentric capacity electrodes 31, 32. From this approximate centre, each connector wire 33, 34 has branches 36, 37 extending to multiple connection points. Preferably the branches are spread out evenly over the circular shape defined by each of the electrodes 31, 32. In a side sectional view, figure 13 shows the multilayer structure 35 with the leads to form this bicycle-wheel configuration. Also in figure 13 is shown a cover layer 38 to maintain the electrodes 31, 32 in the multilayer structure watertight.

Also the figure 13 embodiment is shown to have EC electrodes 6, 7 with corresponding wiring 39, 40, extending straight through the multilayer structure 35.

The figure 14 embodiment relates to a configuration, in which a wire 41 extends through the substrate 9 to be gripped by a clamp 42 for connection to a controller or calculation device 43, which may be incorporated into the device 44 of this embodiment. The device itself is intended to be held against the outer side-, top- or bottom surface of the substrate to derive the necessary information for making the calculus and result in a value of the water or humidity content of the plant growth substrate 9.

This sensor concept is small and simple which makes the production of the sensor cheap and furthermore makes the sensor and thereby the measurements more reliable.

The design of the sensor approaches a more ideal sensor in physical sense, which fact eliminates the need for calibration per piece.

By choosing an appropriate electrode layout, a shorter route for the electrons and/or the electric fields crossing with more certainty more material in the substrate 9 can be achieved, which results directly in more reliable result for determining the water content of the substrate 9.

After taking note of the preceding revelations, insights and embodiments of the present invention, many alternative and additional embodiments will occur to the skilled person, which should all be considered as falling within the letter or spirit of the present invention as defined in the appended claims. For instance, meandering electrode configurations on at least one carrier could be contemplated. Two carriers each having one capacity electrode thereon could be connected via an extendable arm to be arranged against opposite substrate 9 surfaces. An automatic measuring device could be employed to measure the distance between the carriers in order to take the distance into account for making the calculus.

## Claims

1. A plant growth substrate water content measuring device to determine a value of water content in a substrate for growing plant material, for instance a substrate slab made from mineral wool, such as glass wool or stone wool, coco, peat or any other organic or non-organic material, wherein the device at least comprises:
- a first electrode and a second electrode;
- control means at least in use connected to the first electrode and the second electrode, the control means comprising at least detecting means for registering a capacitance between the first electrode and the second electrode and calculating means to deduce from the registered capacitance a value of the water content in the substrate,
wherein at least one of the first electrode and the second electrode extends in or along a plane in correspondence with at least one outer boundary surface of the substrate.

2. The device of claim 1, wherein the device comprises a single carrier having at least one carrier surface, on which at least one of the first electrode and the second electrode is arranged to define a single planar surface.

3. The device of claim 2, wherein the first electrode and the second electrode are arranged on the carrier surface of the single carrier in an intertwined manner.

4. The device of claim 2 or 3, wherein the first electrode and the second electrode each form a loop.

5. the device of claim 2 or 3, wherein the first electrode and the second electrode are arranged on the carrier surface of the single carrier in a concentric manner.

6. The device of any of the preceding claims, further comprising a connector for electrical connection of either or both of the first electrode and the second electrode with the control means, and a connection between the connector and either or both of the first electrode and the second electrode, the connection having multiple conductive branches on, in or through the carrier.

7. The device of any of the preceding claims, wherein the device comprises two carriers each having a carrier surface, where the first electrode is arranged on the carrier surface of a first of the two carriers and the second electrode is arranged on the carrier surface of a second of the carriers.

8. The device of claim 7, wherein the carriers are interconnected.

9. The device of claim 7 or 8, wherein the carriers are interconnected at an angle relative to one-another to define two planar surfaces at an angle relative to one another.

10. The device of any of the preceding claims, wherein the first electrode and the second electrode are arranged on at least one carrier surface in a side-by side relationship.

11. The device of any of the preceding claims, further comprising fastening means for holding the first electrode and the second electrode in a predetermined position with respect to at least one outer surface of the substrate.

12. The device of claim 11, wherein the fastening means comprise at least one of the means from the group of fastening means, the group comprising: a hook; an anchor; a probe, such as at least one pin forming part of an electric conductivity measuring device; a belt, such as an elastic band or a strap of adhesive tape and/or a similar contraption.

13. The device of any of the preceding claims, further comprising a handle for manual manoeuvring the device.

14. The device of any of the preceding claims, further comprising a separator element having an effective thickness corresponding with a predefined distance between the outer surface of the substrate and either of the first electrode and the second electrode.

15. A process of determining a water or moisture content of a horticultural substrate slab for plant material using a water content measuring device according to claim 1, which process comprises the steps of:
- arranging the first electrode and the second electrode against the predetermined out surface of the substrate; and
- determine the fluid or moisture content, in particular the water content of the substrate for plant material form at least one measurement obtained with the electrodes.
